# EUROPÄISCHE PATENTANMELDUNG

(11) **EP 3 974 512 A1**
(43) Veröffentlichungstag der Anmeldung: **30.03.2022**
(21) Anmeldenummer: 21199313.4
(22) Anmeldetag: 28.09.2021
(51) Int. Cl.: C12C 3/12, C12C 3/00

(54) **VERFAHREN ZUR SEPARATEN ISOMERISIERUNG VON BITTERSTOFFEN**

(30) Priorität: 28.09.2020 AT 508252020
(71) Anmelder: Hölzl, Manfred, 3250 Wieselburg (AT); Ramsauer, Rainer, 1090 Wien (AT)
(72) Erfinder: Hölzl, Manfred, 3250 Wieselburg (AT); Ramsauer, Rainer, 1090 Wien (AT); Ramsauer, Alfred, 3250 Wieselburg (AT)
(74) Vertreter: Babeluk, Michael

(57) **Zusammenfassung**

Die Erfindung betrifft ein Verfahren zur separaten Isomerisierung von Bitterstoffen im Rahmen der Bierherstellung, wobei in einem Isomerisierungsschritt Hopfen und/oder zumindest ein Hopfenerzeugnis in einem Hauptraum eines Isomerisierungsbehälters (1) mit einem wässrigen Medium erhitzt wird und nach dem Isomerisierungsschritt in einem Zugabeschritt der Hopfen und/oder Hopfenerzeugnis einer Bierwürze oder Bier zugegeben wird, wobei zumindest ein Teil der während des Isomerisierungsschritts entstehenden Gase kondensiert und vom Hopfen und/oder Hopfenerzeugnis getrennt aufgefangen werden und wobei die Erhitzung zumindest teilweise durch Einleitung von Wasserdampf zum Hopfen und/oder Hopfenerzeugnis erfolgt, dadurch gekennzeichnet, dass während des Isomerisierungsschritts zumindest eine Lauge zum Hopfen und/oder Hopfenerzeugnis zugeführt wird und dass die Lauge zusammen mit dem Wasserdampf zum Hopfen und/oder Hopfenerzeugnis zugeführt wird.

## Beschreibung

Die Erfindung betrifft ein Verfahren zur separaten Isomerisierung von Bitterstoffen im Rahmen der Bierherstellung welches im Sudhaus vor Ort durchgeführt werden kann, wobei in einem Isomerisierungsschritt Hopfen und/oder zumindest ein Hopfenerzeugnis in einem Hauptraum eines Isomerisierungsbehälters mit einem wässrigen Medium erhitzt wird und nach dem Isomerisierungsschritt in einem Zugabeschritt der Hopfen und/oder Hopfenerzeugnis einer Bierwürze oder Bier zugegeben wird, wobei zumindest ein Teil der während des Isomerisierungsschritts entstehenden Gase kondensiert und vom Hopfen und/oder Hopfenerzeugnis getrennt aufgefangen werden und wobei die Erhitzung zumindest teilweise durch Einleitung von Wasserdampf zum Hopfen und/oder Hopfenerzeugnis erfolgt.

Sie betrifft auch einen Isomerisierungsbehälter zur getrennten Isomerisierung von Hopfenbitterstoffen im Rahmen der Bierherstellung aus Hopfen und/oder zumindest einem Hopfenerzeugnis mit einem Hauptraum und zumindest einer Heizeinrichtung zur Beheizung des Hauptraumes, wobei der Isomerisierungsbehälter zumindest einen Gaskanal aufweist, der mit dem Hauptraum und zumindest einem Kondensator verbunden ist und der Kondensator mit zumindest einem Auffangbehälter verbunden ist.

Hopfen beeinflusst stark den Geschmack des Bieres. Grundsätzlich wird Hopfen während des Würzekochens zugesetzt und gekocht. Bei der Zugabe des Hopfens gehen die enthaltenen α-Säuren, welche zu den Bitterstoffen gehören, nicht in Lösung, es wird aber durch den Kochvorgang eine Isomerisierung der α-Säuren zu wasserlöslichen Iso-α-Säuren erreicht, wodurch im Bier der bittere Geschmack erzeugt wird.

Bei der sogenannten "separaten" Isomerisierung wird die zu isomerisierende Mischung nicht der Würze zugegeben und mit ihr gekocht, sondern separat von ihr erhitzt, wobei die Isomerisierung stattfindet, und erst danach der Würze zugegeben. In der CN 207276586 U wird beispielsweise ein Isomerisierungsbehälter offenbart, in dem eine druckregulierte Isomerisierung möglich ist.

In der WO 2018/083165 A1 wird ein Verfahren zur Isomerisierung von Alpha-Säuren von Hopfen beschrieben, bevor dieser zur weiteren Verwendung im Bierbrauprozess zugeführt wird. Um die Qualität und Vollständigkeit der Isomerisierung zu erhöhen wird ein komplexer Temperaturverlauf verwendet. Dies ist aufwendig in der Regelung und kann nicht verhindern, dass flüchtige Bestandteile des Hopfens während der Isomerisierung verloren gehen. Darüber hinaus ergibt sich die Einstellung des Aromas nur durch den Verlauf der Isomerisierung. Eine Einstellung nach der Isomerisierung ist nicht mehr möglich. Führt der Isomerisierungsprozess zu einem ungewünschten Aroma, so kann dieser nur durch Mischung mit anderem, ebenso behandeltem Hopfen erreicht werden. Dies ist sehr aufwändig und im industriellen Maßstab wenig interessant.

In der WO 2020/025545 A1 und der CN 203866281 U werden Verfahren und Vorrichtungen offenbart, bei denen ein Hopfen-Wassergemisch in einem Behälter erhitzt wird und die entstehenden Gase aufgefangen, kondensiert und getrennt gesammelt werden. Dieses aufgefangene Kondensat ist reich an Aromastoffen. Es kann aber zu einer unvorteilhaften Verschiebung des pH-Wert in den sauren Bereich kommen, was die Qualität des behandelten Hopfens und/oder Hopfenerzeugnisses negativ beeinflusst.

In der AT 514016 B1 wird vorgeschlagen, zum Gemisch aus wässrigem Medium und Hopfen und/oder Hopfenerzeugnis Lauge zuzusetzen und so den pH-Wert zu erhöhen. Dabei kann es jedoch durch die großen Mengen, die gleichzeitig isomerisiert werden, trotzdem in manchen Bereichen des Gemisches zu einem zu niedrigen pH-Wert kommen.

Aufgabe der Erfindung ist damit, ein Verfahren zur separaten Isomerisierung und einen Isomerisierungsbehälter bereitzustellen, der die Qualität des behandelten Hopfens und/oder Hopfenerzeugnis verbessert und eine bessere Einstellbarkeit des Aromas ermöglicht.

Dies wird erfindungsgemäß dadurch gelöst, dass während des Isomerisierungsschritts zumindest eine Lauge zum Hopfen und/oder Hopfenerzeugnis zugeführt wird und dass die Lauge zusammen mit dem Wasserdampf zum Hopfen und/oder Hopfenerzeugnis zugeführt wird.

Sie wird erfindungsgemäß auch dadurch gelöst, dass eine Mischeinrichtung zur Mischung von Wasser mit Lauge vorgesehen ist, welche vorzugsweise dem Dampferzeugungselement vorgeschalten ist.

Durch die Separation der entstehenden Gase werden jene flüchtigen Aromastoffe aufgefangen, welche ansonsten verloren gehen. Damit wird das Aroma des Hopfens oder Hopfenerzeugnisses so gut wie möglich erhalten und die notwendige Menge an Hopfen und/oder Hopfenerzeugnis wird drastisch reduziert. Die Rohstoffeinsparung kann damit gegenüber herkömmlichen Verfahren im Bereich von bis zu 30% oder mehr liegen. Darüber hinaus eröffnet die separate Sammlung eine zusätzliche Einstellmöglichkeit des Aromas. Dieses Destillat kann in beliebiger Menge nach der Isomerisierung direkt der Würze oder Bier zu jedem Zeitpunkt des Brauprozesses zugeführt werden, insbesondere nachdem die Prozessschritte, die eine Behandlung in der Wärme benötigen, abgeschlossen sind. Dies führt zu einer besseren Einstellbarkeit des Aromas des Endprodukts.

Der Isomerisierungsbehälter ist in der Regel ein Tank, beispielsweise aus Edelstahl, vorzugsweise mit einem im Wesentlichen zylindrischen Hauptraum.

Der Gaskanal ist vorzugsweise zumindest eine Rohrleitung oder ähnliches, das das aufsteigende Gas in Richtung Kondensator führt. Dazu ist der Gaskanal vorzugsweise im oberen Bereich des Hauptraumes bei bestimmungsgemäßer Gebrauchslage des Isomerisiernugsbehälters angeordnet, damit er im Gasraum oberhalb des Hopfens und wässrigen Mediums mit dem Hauptraum verbunden ist.

Die Hopfenaromastoffe können beispielsweise der Würze, dem Bier vor oder nach der Hauptgärung bzw. vor der Filtration zugegeben werden.

Unter Isomerisierung wird dabei eine chemische Umwandlung von sauren Substanzen im Hopfen und/oder Hopfenerzeugnis ohne Änderung von deren Summenformel verstanden. Dies ist ein unter Hitze auftretender Prozess zur Umsetzung natürlich im Hopfen vorkommender Substanzen wie α-Säuren, beipsielweise Humulon, Cohumulon oder Adhumulon.

Unter Bierherstellung wird dabei ein Verfahren zur Herstellung eines alkoholischen oder alkoholfreien Bieres, bierähnlichen oder bierhaltigen Getränks oder eine Vorstufe derselben verstanden. Dies schließt folglich auch ein Verfahren zum Zubereiten einer Bierwürze (Bierwürzebereitungsverfahren) mit ein. In der Regel umfasst die Bierherstellung das Maischen von Malz und Wasser, Läutern und danach die Zugabe von Hopfen und/oder Hopfenerzeugnis.

Unter Hopfenerzeugnis wird dabei ein verarbeitetes Erzeugnis aus Hopfen, insbesondere der Hopfendolden, gemeint, welches in Form von beispielsweise Pellets oder Extrakten vorliegen kann.

Unter Erhitzung wird die Zufuhr von Wärme verstanden. Dies kann durch die bloße thermische Behandlung, beispielsweise durch Erwärmung des Mantels des Isomerisierungsbehälters, oder durch Zufuhr einer Substanz mit höherer Temperatur, beispielsweise Wasserdampf, erfolgen.

Erfindungsgemäß kann Hopfen, vorzugsweise die weiblichen Blüten, zumindest ein Hopfenerzeugnis oder eine Mischung derselben verwendet werden. Es können auch verschiedene Sorten von Hopfen vermischt werden. In weiterer Folge wird zugunsten der besseren Lesbarkeit von Hopfen gesprochen, damit ist nach wie vor Hopfen und/oder zumindest ein Hopfenerzeugnis gemeint, falls nicht anders angegeben.

Unter getrenntem Auffangen wird hier das Auffangen, also Sammeln der kondensierten Gase oder Dämpfe in zumindest einem Behälter verstanden, in dem sich der Hopfen nicht befindet, der also nicht der Hauptraum ist.

Das verwendete wässrige Medium ist vorzugsweise enthärtetes Wasser oder auch besonders vorzugsweise Brauwasser. Unter Wasserdampf wird ein Wasser enthaltendes Gas verstanden, das neben dem Wasser auch weitere Substanzen wie beispielsweise Lauge umfassen kann. Vorzugsweise wird der Hopfen maximal 80 Minuten, vorzugsweise maximal 70 Minuten und vorzugsweise zumindest 50 Minuten für die Aromatisierung je nach Bedarf an Hopfenaromastoffen während des Isomerisierungsschrittes erhitzt oder auf einer Temperatur von mindestens 100° gehalten.

Vorzugsweise wird der Hopfen während des getrennten Auffangens der kondensierten Gase auf maximal 110°C, besonders vorzugsweise maximal 105°C, erhitzt.

Vorzugsweise ist vorgesehen, dass für das Kondensieren und getrennte Auffangen Gas aus dem Isomerisierungsbehälter über zumindest einen Gaskanal abgeleitet wird, über einen Kondensator zumindest teilweise verflüssigt wird und in zumindest einem Auffangbehälter aufgefangen wird. Damit kann auf einfache Art und Weise das durch die Erhitzung entstehende Gas abgeführt, kondensiert und in einem getrennten Gefäß aufgefangen werden. Der Kondensator weist vorzugsweise eine Kühleinheit zur Abführung von Wärme auf, um die Überführung in die flüssige Phase zu beschleunigen.

Der Auffangbehälter ist vorzugsweise ein mit Inertgas gefüllter Behälter, alternativ kann auch ein Bag-in-Box-Behälter vorgesehen sein, also ein Behälter mit einem entfaltbaren, elastischen Sack, der in einer festen Hülle angeordnet ist. Damit wird sichergestellt, dass die flüchtigen und mitunter instabilen Aromastoffe bestmöglich erhalten bleiben. Als Inertgas kann beispielsweise CO₂ oder auch Stickstoff verwendet werden.

Besonders vorteilhaft ist, dass die Erhitzung zumindest teilweise durch Einleitung von Wasserdampf zum Hopfen und/oder Hopfenerzeugnis erfolgt. Wird neben dem Hopfen und/oder Hopfenerzeugnis auch andere Stoffe wie Wasser in den Hauptraum vorgelegt, so kann der Dampf in dieses Gemisch eingeleitet werden. Damit wird auf einfache und schonende Art und Weise Wärme eingetragen und in der Masse verteilt. Vorzugsweise ist dabei vorgesehen, dass der Wasserdampf direkt in den Hopfen und/oder Hopfenerzeugnis eingeleitet wird. Damit ist gemeint, dass der Dampf direkt in die Masse eingeleitet wird, beispielsweise durch an die Masse angrenzende Düsen und nicht von oben, beabstanded von der Masse, Dampf in den Hauptraum eingeleitet wird. Entsprechendes gilt auch, wenn vorgesehen ist, dass die Heizeinrichtung zumindest ein Dampferzeugungselement zur Erzeugung von Wasserdampf aufweist.

Weiters kann vorgesehen sein, dass der Wasserdampf über zumindest eine Düse in den Hopfen und/oder Hopfenerzeugnis eingeleitet wird, wobei zumindest eine Düse vorzugsweise in Richtung eines Bodens des Isomerisierungsbehälters gerichtet ist. Dies ermöglicht eine gleichmäßige Erhitzung und Verteilung des Dampfes in der Masse. Gleiches gilt auch, wenn vorgesehen ist, dass die Heizeinrichtung zumindest eine im Hauptraum angeordnete, mit dem Dampferzeugungselement strömungsverbundene oder strömungsverbindbare Düse aufweist, welche vorzugsweise in der unteren Hälfte des Hauptraumes angeordnet ist und besonders vorzugsweise in Richtung eines Bodens des Hauptraumes gerichtet ist. Unter strömungsverbunden ist damit gemeint, dass der vom Dampferzeugungselement erzeugte Dampf über eine Strömungsverbindung, beispielsweise einen Kanal, zur Düse bewegbar ist. Unter strömungsverbindbar ist gemeint, dass diese Strömungsverbindung unterbrechbar oder beschränkbar ist, beispielsweise durch ein Ventil.

Um den ph-Wert des wässrigen Medium-Hopfengemisches anzuheben ist vorgesehen, dass während des Isomerisierungsschritts zumindest eine Lauge zum Hopfen und/oder Hopfenerzeugnis zugeführt wird, vorzugsweise Kalilauge. Dadurch kann der sinkende ph-Wert während der Isomerisierung ausgeglichen werden. Vorzugsweise ist vorgesehen, dass dabei der ph-Wert auf 11 oder höher, besonders vorzugsweise auf etwa 12 eingestellt wird. Es kann auch vorgesehen sein, dass die Zuführung der Lauge auch nur während eines Zeitabschnitts des Isomerisierungsschrittes erfolgt. Vorzugsweise wird dabei Kalilauge in Lebensmittelqualität als Zusatzstoff E525 verwendet.

Um eine gute Verteilung der Lauge sicherzustellen, ist vorgesehen, dass die Lauge zusammen mit dem Wasserdampf zum Hopfen und/oder Hopfenerzeugnis zugeführt wird. Dies kann erreicht werden, indem die Lauge mit dem Wasser vermischt wird und danach diese Mischung verdampft wird, oder indem die Lauge mit dem bereits verdampften Wasserdampf zusammengeführt wird. Gleiches gilt auch, wenn vorgesehen ist, dass eine Mischeinrichtung zur Mischung von Wasser mit Lauge vorgesehen ist, welche vorzugsweise dem Dampferzeugungselement vorgeschalten ist.

Es kann vorgesehen sein, dass in zumindest einem Zeitabschnitt des Isomerisierungsschritts zuerst die Gase kondensiert und vom Hopfen und/oder Hopfenerzeugnis getrennt aufgefangen werden und in einem darauf folgenden Zeitabschnitt der Hauptraum im Wesentlichen verschlossen wird und kein getrenntes Auffangen mehr erfolgt. Damit kann die Abtrennung nach Verdampfung der wesentlichsten flüchtigen Aromastoffe beendet werden und verhindert werden, dass das getrennte Kondensat zu groß und von Wasser zu stark verdünnt wird.

Weiters ist vorteilhaft, wenn während des Isomerisierungsschritts in zumindest einem Zeitabschnitt mit geschlossenem Hauptraum der Druck im Isomerisierungsbehältnis auf zumindest 1,0 bar, vorzugsweise 1,5 bar erhöht wird und besonders vorzugsweise die Temperatur auf zumindest 120°C, ganz besonders vorzugsweise 127°C erhöht wird. Dies geschieht vorzugsweise in einem Zeitabschnitt, bei dem das getrennte Auffangen nicht erfolgt. Damit kann der Isomerisierungsprozess beschleunigt werden, nachdem die wesentlichsten, flüchtigen Aromastoffe abgetrennt wurden.

Um den Isomerisierungsprozess weiter zu beschleunigen kann vorgesehen sein, dass zu Beginn des Isomerisierungsschritts Hopfen und/oder Hopfenerzeugnis sowie ein wässriges Medium in den Isomerisierungsbehälter vorgelegt wird, wobei das wässrige Medium vorzugsweise vorerwärmtes wässriges Medium mit einer Temperatur von zumindest 85°C, besonders vorzugsweise zumindest 95°C ist. Insbesondere wenn das wässrige Medium bereits vorgewärmt ist, kann die Isomerisierung schneller beginnen und zeitsparend durgeführt werden.

Vorzugsweise wird pro Gramm Alpha-Säure des Hopfens und/oder Hopfenerzeugnisses minimal 150 ml und/oder maximal 400 ml wässriges Medium vorgelegt. Dazu ist vorteilhaft, den ungefähren Alpha-Säurengehalt des Hopfens und/oder Hopfenerzeugnisses zu kennen. Da der Alpha-Säurengehalt zwischen dem unbehandelten Hopfenblüten und Hopfenextrakten stark unterschiedlich sein kann, wird so die ideale Menge an Flüssigkeit vorgelegt.

Weiters kann vorgesehen sein, dass ein Teil der getrennt aufgefangenen, kondensierten Gase wieder in den Isomerisierungsbehälter rückgeführt werden, wobei dieser Teil vorzugsweise zumindest überwiegend ein hydrophiler Teil ist. Dem entsprechend kann vorgesehen sein, dass der Auffangbehälter zumindest eine Rückführleitung in den Hauptraum aufweist, oder die Rückführleitung mit dem Hauptraum und vor dem Auffangbehälter mit dem Kondensator, oder mit dem Hauptraum und zwischen dem Kondensator und dem Auffangbehälter mit einem das kondensierte Gas führenden Kanal verbunden ist. Da die meisten Aromastoffe lipophil sind, liegen die kondensierten Gase in aller Regel als zweiphasiges System mit einer lipophilen und einer hydrophilen Phase vor. Durch die Rückführung des kondensierten Wassers können die Aromastoffe möglichst weitgehend aufkonzentriert und damit aufgereinigt werden.

Weiters ist vorteilhaft, wenn die kondensierten Gase im Laufe des Isomerisierungsschritts während eines Zeitraumes und zumindest eines anderen Zeitraumes voneinander getrennt aufgefangen werden. Damit wird das Kondensat abhängig von der Destillationszeit fraktioniert. Dies kann einerseits dazu genutzt werden, die wenig edlen Aromastoffe am Beginn der Destillation von den danach folgenden Aromastoffen zu trennen. Andererseits können auch verschiedene Aromen zur späteren Auswahl und Mischung zur Verfügung stehen.

Der Hauptraum dient zur Aufnahme des Hopfens und wässrigen Mediums während der Isomerisierung. Dabei weist der Hauptraum vorzugsweise eine Höhe auf, die mindestens so groß ist, wie ihre Breite, besonders vorzugsweise ist der Hauptraum zumindest zweimal so hoch, wie breit. Vorzugsweise ist ein maximaler Flüssigkeitsstand des Hauptraumes maximal 70%, vorzugsweise maximal 60% der Höhe des Hauptraumes. Der maximale Flüssigkeitsstand ist die Höhe, bis zu der die eingefüllte Masse während des Isomerisierungsprozesses maximal reicht.

Der Gaskanal weist vorzugsweise ein Ventil auf, damit die Ableitung der Gase aus dem Hauptraum nach einer bestimmten Zeit unterbrochen oder beendet werden kann.

Weiters ist vorteilhaft, wenn der Hauptraum zumindest gegenüber der Umgebung verschließbar ist. Damit kann ein Druckunterschied zwischen Hauptraum zur Umwelt aufgebaut werden und die Isomerisierung unter erhöhtem Druck stattfinden.

Vorzugsweise ist vorgesehen, dass der Boden des Hauptraumes mit zumindest einem Abführkanal zum Abführen des behandelten Hopfens und/oder zumindest einem Hopfenerzeugnis verbunden ist. Dieser Abführkanal kann besonders vorzugsweise an einem tiefsten Punkt des Hauptraumes in bestimmungsgemäßer Gebrauchslage mit dem Hauptraum verbunden sein und so das vollständige Abführen des isomerisierten Hopfens gewährleisten.

Weiters kann vorgesehen sein, dass der Hauptraum zumindest mit einen Hopfenzufuhrkanal zur Zugabe des Hopfens und/oder Hopfenerzeugnisses verbunden ist und dass der Hopfenzufuhrkanal im Handbetrieb als auch im Automatikbetrieb beschickbar ist. Vorzugsweise weist der Hopfenzufuhrkanal einen Rohrkettenförderer auf. Dies gewährleistet eine einfache und schnelle Zugabe des Hopfens.

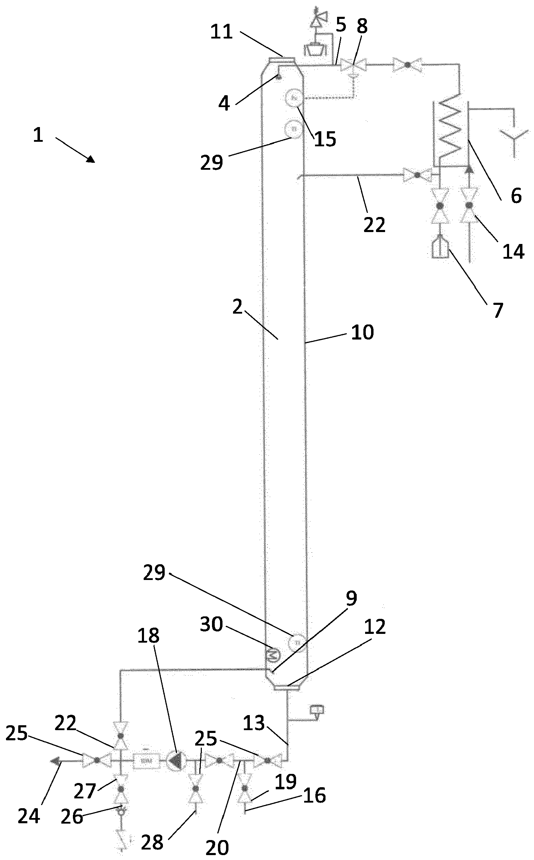

In der Folge wird die Erfindung anhand der nicht einschränkenden Ausführungsform in der Figur beschrieben. Es zeigt
die Figur eine Ausführungsform eines erfindungsgemäßen Isomerisierungsbehälters in einer schematischen Seitenansicht.

Die gezeigte Ausführungsform eines Isomerisierungsbehälters 1 weist einen länglichen Hauptraum 2 zylindrischer Form auf, welcher durch einen verschließbaren Mantel 10 begrenzt wird. Er steht in bestimmungsgemäßer Gebrauchslage aufrecht und weist einen Durchmesser und eine Höhe auf, welche auf die jeweils zu isomerisierende Hopfenmenge abgestimmt ist, vorzugsweise einen Durchmesser von etwa 0,6 m und eine Höhe von etwa 3 m. Auf der Oberseite weist der Mantel 10 eine verschließbare Zugabeöffnung 11 auf, die mit einem Hopfenzufuhrkanal verbunden oder verbindbar ist (nicht dargestellt). So kann Hopfen, oder Hopfenerzeugnis von oben in den Hauptraum 2 eingefüllt werden. An der Unterseite weist der Mantel 10 an seinem Boden eine Ausflussöffnung 12 zum Abführen des isomerisierten Gemisches auf. Die Ausflussöffnung 12 ist als Klappe ausgeführt und mit einem Ausflusskanal 13 verbunden, welcher das isomerisierte Hopfen-Flüssigkeitsgemisch aus dem Hauptraum 2 abführt.

Im Bereich der Oberseite des Hauptraumes 2 ist eine Kanalöffnung 4 vorgesehen, welche mit einem Gaskanal 5 verbunden ist. Dieser Gaskanal 5 ist als Rohrleitung ausgeführt und leitet das im Hauptraum 2 aufsteigende und über die Kanalöffnung 4 eintretende Gas zu einem Kondensator 6 mit Wasserkühlung 14. Der Kondensator 6 ist mit einem Auffangbehälter 7 verbunden, welcher das im Kondensator 6 kondensierte Gas auffängt und getrennt vom Hauptraum 1 kühl verwahrt. Entlang der Strömungsverbindung zwischen Hauptraum 2 und Kondensator 6 ist ein Ventil 8 im Gaskanal 5 angeordnet, über welches der Gaskanal 5 verschließbar ist. Das Ventil 8 ist durch einen Drucksensor 15 aber auch durch den Benutzer steuerbar, über das der Druck im Hauptraum 2 regelbar ist. Entlang der Fluidverbindung zwischen Kondensator 6 und Auffangbehälter 7 ist eine Rückführleitung 22 angeordnet, welche eine Fluidverbindung mit dem Hauptraum 2 herstellt. So kann ein Teil des kondensierten Gases oder Dampfes wieder rückgeführt werden. Über ein Ventil ist diese Rückführleitung 22 verschließbar.

Über eine Wasserzufuhrleitung 16 wird enthärtetes Brauwasser, das davor zu einer Mischeinrichtung (nicht dargestellt) zur Anreicherung mit Kalilauge (KOH) in Lebensmittelqualität geleitet wurde, über ein zweites Ventil 19 zu einem Hauptkanal 20 geleitet. In der Mischeinrichtung wird dem Brauwasser abhängig von der Einstellung des Benutzers Lauge in bestimmten Umfang über zumindest einen Teil des Isomerisierungsschritts zugegeben und vorzugsweise ein pH Wert von 12 eingestellt. Mittels einer Pumpe 18 wird die vorerwärmte Flüssigkeit dann mittels Öffnung eines dritten Ventils 22 im Bereich der Unterseite im Hauptraum 2 eingeleitet. Zu Beginn des Isomerisierungsschritts wird so im unteren Drittel des Hauptraumes auf etwa 95°C vorgewärmtes Wasser eingeleitet und mit dem Hopfen vermengt. Über eine Dampfzufuhrleitung 26 wird Wasserdampf, das vorzugsweise ebenso mit Kalilauge versetzt ist und besonders vorzugsweise ebenso auf einen pH Wert von 12 eingestellt wurde, über ein viertes Ventil 27 in den Hauptkanal 20 eingebracht. Dieser mit Lauge angereicherte Wasserdampf wird dann über das offene dritte Ventil 22 über eine Düse 9 in den unteren Bereich des Hauptraumes 2 geleitet, über die auch das Wasser einleitbar ist. Die Düse 9 weist dabei in Richtung des Bodens des Mantels 10 in Richtung Untergrund. Dies verhindert das Verstopfen der Düse 9 durch feste Hopfenbestandteile. Bei größeren Durchmessern kann vorteilhaft sein, mehrere Düsen 9 vorzusehen.

Der Hauptkanal 20 steht weiters in Verbindung mit dem Ausflusskanal 13 und einem Abführkanal 24 zum Abführen des isomerisierten Hopfens zur Weiterverwendung im Brauprozess. Somit dient die Pumpe 18 auch zum Abtransport des isomerisierten Hopfens über den Ausflusskanal 13 zum Abführkanal 24. Er weist auch eine Verbindung zu einem Abfluss 28 zur Reinigung des Hauptkanals 20 auf. Damit der Hauptkanal 20 diese unterschiedlichen Aufgaben erfüllten kann, ist er durch Ventile 19, 22, 25, 27 von jedem Kanal trennbar, der mit ihm verbunden ist. Im oberen und im unteren Bereich des Hauptraumes 2 sind Temperatursensoren 29 zur Messung der Temperatur vorgesehen. Weiters ist im unteren Bereich des Hauptraumes 2 eine zusätzliche Heizeinrichtung 30 zur weiteren Erhitzung vorgesehen, welcher mit den Temperatursensoren verbunden sein kann.

In der Folge wird ein erfindungsgemäßes Verfahren zur separaten Isomerisierung von α-Säuren im Rahmen der Bierherstellung in einer bevorzugten Ausführungsform beschrieben, wie es mit der in der Figur gezeigten Vorrichtung durchführbar ist. Dabei wird Hopfen oder ein Hopfenprodukt zur Isomerisierung der α-Säuren und Separierung der Hopfenöle einem wässerigen Medium zugegeben und erhitzt und das Hopfen bzw. Hopfenprodukt enthaltende wässerige Medium (Kationentauscher enthärtetes Vorlage und Speisewasser pH ca. 12) in Gegenwart von Kaliumhydroxid E 525 mittels Reindampf (2 bar) pH-Wert 12 auf maximal 100 - 105°C erhitzt. Anschließend wird ca. 50 - 70 min zur Vervollständigung der Isomerisierung mit Reindampf direkt (pH-Wert 12) beaufschlagt. Dabei werden zuerst die unedlen Hopfenaromastoffe ausgedampft und eventuell abgeführt - über den Kondensator ohne Einleitung in das Auffanggefäß oder als Dampf direkt -, danach werden die flüchtigen Hopfenaromastoffe über einen Kühler kondensiert (Destillat). Im Reaktor verbleiben die iso-Alphasäuren (als Suspension).

Vorzugsweise wird das Destillat in einem mit Inertgas beaufschlagten Auffangbehälter oder in einer aluminierten Bag in Box gestapelt und dann je nach gewünschtem Hopfenaroma in der Würzepfanne, im Whirpool, nach der Würzekühlung, nach der Hauptgärung oder vor der Filtration eingebracht. Die isomerisierte Alphasäure (Suspension) wird der kochenden Würze beigegeben. Durch die Vorisomerisierung ist unabhängig von der Würzekochzeit immer eine konstante Hopfenausbeute gewährleistet. Es ist somit möglich, jedem Bier sein eigenes spezielles Hopfenaroma zu verleihen. Dies ist von besonderem Vorteil bei der Erzeugung von hopfenaromatischen Bieren.

Dem wässrigen Medium wird vorteilhafterweise:
Kalilauge (KOH) E 525 als Lebensmittelzusatzstoff zugelassen zugegeben, zur Einstellung des wässerigen Mediums auf pH-Wert 12.
Während der Isomerisierungsphase fällt der pH-Wert von Suspension und Kondensat auf unter 8.

Eine bevorzugte Ausführungsform des erfindungsgemäßen Verfahrens besteht darin, dass das wässrige Medium, dem der Hopfen bzw. das Hopfenprodukt zugegeben wird, eine Temperatur im Bereich von ca. 95°C besitzt.

Für den Befüllungsgrad des Reaktors soll das Verhältnis Durchmesser zu Höhe mindestens 1:1 ausgelegt sein. Der Befüllungsgrad des Reaktors soll zwischen 60% und max. 70% des Gesamtvolumens sein, um ein Überlaufen des Reaktors zu verhindern.

Eine weitere bevorzugte Variante des erfindungsgemäßen Verfahrens ist dadurch gekennzeichnet, dass das wässerige Medium, dem der Hopfen bzw. das Hopfenprodukt zugegeben wird, enthärtetes Wasser ist.

Durch das System der Hopfenvorisomerisierung vor Ort werden folgende Verbesserungen im Vergleich zur herkömmlichen Hopfengabe ermöglicht:
1.) Eine Hopfenausbeute von ca. 50% - 70% im Vergleich zur herkömmlichen Hopfengabe, Hopfenpellets oder Hopfenextrakt von ca. 30% - 40% bei gleichbleibender Produktqualität.
2.) Durch Trennung der Hopfenkomponenten in Suspension (also des isomerisierten Hopfens in wässrigem Medium) und Hopfenölen, kann die Suspension bei der Würzekochung zu jedem beliebigen Zeitpunkt ohne Bitterwertverluste zugegeben werden.
3.) Das System der Hopfenvorisomerisierung ermöglicht es, die Hopfengaben zu jedem beliebigen Zeitpunkt als Teilgaben während der Würzekochung und auch im Whirlpool kurz vor Beginn der Würzekühlung vorzunehmen, dies ermöglicht eine Verringerung der Ausbeuteverluste. Die Zugabe der Hopfenöle kann in der Würzepfanne, im Whirpool, nach der Würzekühlung, nach der Hauptgärung oder vor der Filtration eingebracht. Die Würzekochzeiten können nach dem derzeitigen Stand der Sudhaustechnologie bei gleichbleibender Hopfenausbeute wesentlich verkürzt werden, wodurch sich eine beträchtliche Primärenergieeinsparung ergibt.
4.) Konstante Hopfenausbeute unabhängig von der Kochzeit. Zusätzlich wird die Kochzeit des Würzekochens verkürzt.
5.) Variable Einstellung des Hopfenaromas bezogen auf die Hopfensorte.
6.) Kein Anfall von Hopfentreber im Gärtank welche zu Verstopfungen und Filtrationsproblemen führen kann (Kalthopfung). Durch die Gabe von Hopfenölen und somit kein zusätzlicher Extraktverlust. Durch das erfindungsgemäße Verfahren kann eine Hopfenlösung gewonnen werden, die separierten Hopfenöle können in gewünschter Ausprägung (in Abhängigkeit des Ausgangshopfen) dem Bier in "kalten" Verfahrensschritten zugesetzt werden. Ziel ist es, mit ein- und demselben Hopfen unterschiedliche Hopfennoten zu erzielen, wobei die Variationen viel größer sind als bei der klassischen Hopfung.
7.) Aufbewahrung der Hopfenöle vorzugsweise in einem mit Inertgas beaufschlagten Behälter, oder in einer aluminisierten Bag in Box, damit wird der Kontakt mit Licht und Luft vermieden, somit wird ein Qualitätsverlust weitgehend verhindert.
8.) Die Leitaromakomponente Linalool erhöht sich je nach Entlüftungsdauer gegenüber der klassischen Hopfung um bis zu 25%.
9.) Auch das Cis/trans Verhältnis erhöht sich gegenüber der klassischen Hopfung, d.h. die Alterungsstabilität wird verbessert.
10.) Alle relevanten Substanzen wie die Gruppe der Gerbstoffe, Hopfenöle, iso-Xanthohumole, Betasäuren usw. werden durch das Verfahren nicht verändert und die mit vorisomerisierten Hopfen gehopfte Würze ist mit einer klassisch gehopften Würze qualitativ bis auf die oben genannten Vorteile gleichwertig.

## Patentansprüche

1. Verfahren zur separaten Isomerisierung von Bitterstoffen im Rahmen der Bierherstellung, wobei in einem Isomerisierungsschritt Hopfen und/oder zumindest ein Hopfenerzeugnis in einem Hauptraum eines Isomerisierungsbehälters (1) mit einem wässrigen Medium erhitzt wird und nach dem Isomerisierungsschritt in einem Zugabeschritt der Hopfen und/oder Hopfenerzeugnis einer Bierwürze oder Bier zugegeben wird, wobei zumindest ein Teil der während des Isomerisierungsschritts entstehenden Gase kondensiert und vom Hopfen und/oder Hopfenerzeugnis getrennt aufgefangen werden und wobei die Erhitzung zumindest teilweise durch Einleitung von Wasserdampf zum Hopfen und/oder Hopfenerzeugnis erfolgt, **dadurch gekennzeichnet, dass** während des Isomerisierungsschritts zumindest eine Lauge zum Hopfen und/oder Hopfenerzeugnis zugeführt wird und dass die Lauge zusammen mit dem Wasserdampf zum Hopfen und/oder Hopfenerzeugnis zugeführt wird.

2. Verfahren nach Anspruch 1, **dadurch gekennzeichnet, dass** für das Kondensieren und getrennte Auffangen Gas aus dem Isomerisierungsbehälter (1) über zumindest einen Gaskanal (5) abgeleitet wird, über einen Kondensator (6) zumindest teilweise verflüssigt wird und in zumindest einem Auffangbehälter (7) aufgefangen wird.

3. Verfahren nach einem der Ansprüche 1 oder 2, **dadurch gekennzeichnet, dass** der Wasserdampf über zumindest eine Düse (9) in den Hopfen und/oder Hopfenerzeugnis eingeleitet wird, wobei zumindest eine Düse vorzugsweise in Richtung eines Bodens des Isomerisierungsbehälters gerichtet ist.

4. Verfahren nach einem der Ansprüche 1 bis 3, **dadurch gekennzeichnet, dass** die zumindest eine Lauge, die zum Hopfen und/oder Hopfenerzeugnis zugeführt wird, Kalilauge ist.

5. Verfahren nach einem der Ansprüche 1 bis 4, **dadurch gekennzeichnet, dass** in zumindest einem Zeitabschnitt des Isomerisierungsschritts zuerst die Gase kondensiert und vom Hopfen und/oder Hopfenerzeugnis getrennt aufgefangen werden und in einem darauf folgenden Zeitabschnitt der Hauptraum im Wesentlichen verschlossen wird und kein getrenntes Auffangen mehr erfolgt.

6. Verfahren nach einem der Ansprüche 1 bis 5, **dadurch gekennzeichnet, dass** während des Isomerisierungsschritts in zumindest einem Zeitabschnitt mit geschlossenem Hauptraum der Druck im Isomerisierungsbehältnis auf zumindest 1 bar, vorzugsweise 1,5 bar, erhöht wird und besonders vorzugsweise die Temperatur auf zumindest 120°C, ganz besonders vorzugsweise 127°C, erhöht wird.

7. Verfahren nach einem der Ansprüche 1 bis 6, **dadurch gekennzeichnet, dass** zu Beginn des Isomerisierungsschritts Hopfen und/oder Hopfenerzeugnis sowie ein wässriges Medium in den Isomerisierungsbehälter vorgelegt wird, wobei das wässrige Medium vorzugsweise vorerwärmtes wässriges Medium mit einer Temperatur von zumindest 85°C, besonders vorzugsweise zumindest 95°C ist.

8. Verfahren nach einem der Ansprüche 1 bis 7, **dadurch gekennzeichnet, dass** ein Teil der getrennt aufgefangenen, kondensierten Gase wieder in den den Isomerisierungsbehälter rückgeführt werden, wobei dieser Teil vorzugsweise zumindest überwiegend ein hydrophiler Teil ist.

9. Verfahren nach einem der Ansprüche 1 bis 8, **dadurch gekennzeichnet, dass** die kondensierten Gase im Laufe des Isomerisierungsschritts während eines Zeitraumes und zumindest eines anderen Zeitraumes voneinander getrennt aufgefangen werden.

10. Isomerisierungsbehälter (1) zur getrennten Isomerisierung von Bitterstoffen im Rahmen der Bierherstellung aus Hopfen und/oder zumindest einem Hopfenerzeugnis mit einem Hauptraum (2) und zumindest einer Heizeinrichtung zur Beheizung des Hauptraumes (2), wobei der Isomerisierungsbehälter (1) zumindest einen Gaskanal (5) aufweist, der mit dem Hauptraum (2) und zumindest einem Kondensator (6) verbunden ist und der Kondensator (6) mit zumindest einem Auffangbehälter (7) verbunden ist, **dadurch gekennzeichnet, dass** eine Mischeinrichtung zur Mischung von Wasser mit Lauge vorgesehen ist, welche vorzugsweise dem Dampferzeugungselement vorgeschalten ist.

11. Isomerisierungsbehälter (1) nach Anspruch 10, **dadurch gekennzeichnet, dass** der Hauptraum (2) eine Höhe aufweist, die mindestens so groß ist, wie ihre Breite, vorzugsweise die Höhe zumindest doppelt so groß wie die Breite.

12. Isomerisierungsbehälter (1) nach Anspruch 10 oder 11, **dadurch gekennzeichnet, dass** der Gaskanal (5) ein Ventil (8) aufweist.

13. Isomerisierungsbehälter (1) nach einem der Ansprüche 10 bis 12, **dadurch gekennzeichnet, dass** der Hauptraum (2) zumindest gegenüber der Umgebung verschließbar ist.

14. Isomerisierungsbehälter (1) nach einem der Ansprüche 10 bis 13, **dadurch gekennzeichnet, dass** die Heizeinrichtung zumindest ein Dampferzeugungselement zur Erzeugung von Wasserdampf aufweist.

15. Isomerisierungsbehälter nach einem der Ansprüche 10 bis 14, **dadurch gekennzeichnet, dass** die Heizeinrichtung zumindest eine im Hauptraum (2) angeordnete, mit dem Dampferzeugungselement strömungsverbunde oder strömungsverbindbare Düse (9) aufweist, welche vorzugsweise in der unteren Hälfte des Hauptraumes (2) angeordnet ist und besonders vorzugsweise in Richtung eines Bodens des Hauptraumes gerichtet ist.
